# EUROPÄISCHE PATENTANMELDUNG

(11) **EP 4 697 737 A1**
(43) Veröffentlichungstag der Anmeldung: **18.02.2026**
(21) Anmeldenummer: 25196190.0
(22) Anmeldetag: 15.08.2025
(51) Int. Cl.: H04N 23/698, H04M 1/02, H04N 23/57, H04N 23/90

(54) **KAMERASYSTEM ZUR ERZEUGUNG EINES 360-GRAD-PANORAMABILDES**

(30) Priorität: 15.08.2024 CH 8602024
(71) Anmelder: New Allround GmbH, 8212 Neuhausen Rheinfall Schaffhausen (CH)
(72) Erfinder: Nersisyan, Karen, 8212 Neuhausen am Rheinfall (CH)
(74) Vertreter: Schirbach, Marcel

(57) **Zusammenfassung**

Bei einem erfindungsgemässen Kamerasystem zur Erzeugung eines 360-Grad-Panoramabildes mit einer Rückseite (RS) und einer Frontseite (FS), weist dieses Kamerasystem eine Oberkante (A), eine Unterkante (B), eine erste Seitenkante (C1) und eine zweite Seitenkante (C2) auf, wobei das Kamerasystem ein Kommunikationsgerät (K) umfasst. Das Kommunikationsgeräts (K) weist auf der Frontseite eine Frontseitenkamera (FK) auf, wobei die Oberkante (A) eine Oberkantenkamera (OK) aufweist, die Unterkante (B) eine Unterkantenkamera (UK) aufweist, und wobei die erste Seitenkante (C1) eine erste Seitenkantenkamera (SK1) und die zweite Seitenkante (C2) eine zweite Seitenkantenkamera (C2) aufweisen. Eine auf der Rückseite (RS) angeordnete Rückseitenkamera (RK) oder die Frontseitenkamera (FK) sind mit der Oberkantenkamera (OK), mit der Unterkantenkamera (UK) und mit der ersten und der zweiten Seitenkamera (SK1, SK2) derart in Wirkverbindung bringbar, dass mit dem Kommunikationsgerät (K) eine bildliche rückseitenzugewandte oder eine bildliche frontseitenzugewandte 360-Grad-Panoramabilddarstellung einer räumlichen Umgebung des Kommunikationsgeräts (K) darstellbar sind.

## Beschreibung

### Technisches Gebiet

Die vorliegende Erfindung bezieht sich auf das Gebiet der Fotografie und Videografie. Insbesondere offenbart die vorliegende Erfindung ein Kamerasystem zur Erzeugung eines 360-Grad-Panoramabilds gemäss dem Oberbegriff des Anspruchs 1.

### Stand der Technik, technologischer Hintergrund der Erfindung

Die meisten Kameras bieten nur einen kleinen Betrachtungswinkel. Eine typische herkömmliche Kamera nimmt daher nur ein Bild in der Richtung auf, in die die Kamera gerichtet ist. Kameras mit eingeschränktem Blickwinkel zwingen den Betrachter dazu, nur das zu sehen, worauf der Kameramann den Fokus legt. Einige Kameras verwenden ein spezielles Weitwinkelobjektiv, um ein breiteres Panoramabild zu erfassen, aber solche Panoramakameras haben immer noch ein begrenztes Sichtfeld.

Ein Kamerasystem zur Erzeugung eines 360-Grad-Panoramabilds, auch 3D-Kamerasystem genannt, ist eine Technologie, die es ermöglicht, dreidimensionale Bilder oder Modelle von Objekten oder Szenen aufzunehmen. Solche Systeme werden in verschiedenen Anwendungen eingesetzt, darunter in der Robotik, im Automobilbereich, in der Medizintechnik und in der Filmproduktion. Ein solches 3D-Kamerasystem besteht oft aus zwei oder mehr Kameras, die in einem bestimmten Abstand voneinander angeordnet sind. Diese Anordnung ahmt das menschliche Sehen nach, bei dem zwei Augen verwendet werden, um Tiefeninformationen zu erfassen. Die Kameras sind hierfür mit speziellen Bildsensoren ausgestattet, die Licht einfangen und in digitale Signale umwandeln. Diese Bildsensoren können dabei verschiedene Arten von Licht erfassen, einschließlich sichtbarem Licht, Infrarotlicht oder sogar Laserlicht. Ein Computerprozessor oder eine dedizierte Hardware verarbeitet die aufgenommenen Bilder und extrahiert die Tiefeninformationen.

Eine grundlegende Methode eines 3D-Kamerasystems basiert auf der Stereoskopie. Dabei werden Bilder von zwei (oder mehreren) Kameras aufgenommen und miteinander verglichen, um Unterschiede in der Perspektive zu erkennen. Diese Unterschiede werden dann verwendet, um die Tiefeninformationen zu berechnen und ein 3D-Modell bzw. ein 360-Grad-Panoramabildes der Szene zu erstellen.

Anwendung finden solche Kamerasysteme zur Erzeugung eines 360-Grad-Panoramabilds beispielsweise in der Robotik 3D-Kamerasysteme, um die Umgebung zu erfassen und Objekte zu erkennen, was es Robotern ermöglicht, in einer 3D-Welt zu navigieren. Eine weitere Anwendung finden solche Kamerasysteme zur Erzeugung eines 360-Grad-Panoramabilds beispielsweise beim autonomen Fahren. In selbstfahrenden Autos werden solche Systeme eingesetzt, um Hindernisse und die Umgebung in Echtzeit zu erfassen und zu analysieren. Ferner finden solche Kamerasysteme zur Erzeugung eines 360-Grad-Panoramabilds Anwendung bei der medizinischen Bildgebung. In der Medizin werden 3D-Kamerasysteme für präzise Scans von Körperteilen verwendet, beispielsweise in der Zahnmedizin oder bei der Planung von Operationen. Des Weiteren finden solche Kamerasysteme zur Erzeugung eines 360-Grad-Panoramabilds Anwendung in den Bereichen Virtuelle Realität (VR) und Augmented Reality (AR). 3D-Kamerasysteme sind essenziell für die Erstellung von immersiven virtuellen Welten und der Einblendung digitaler Inhalte in die reale Welt.

Die herkömmlichen Kamerasystem zur Erzeugung eines 360-Grad-Panoramabilds allgemeinen Hausgebrauch nicht geeignet, da diese Kamerasysteme unerschwinglich und unhandlich sind.

### Darstellung der Erfindung

Es ist Aufgabe der vorliegenden Erfindung, eine Kamerasystem zur Erzeugung eines 360-Grad-Panoramabildes dahingehend weiterzuentwickeln, dass dieses Kamerasystem einer allgemeinen Nutzung zugänglich wird und Baugrösse auf ein portables Format reduziert wird.

Die dieser Erfindung für ein Kamerasystem zur Erzeugung eines 360-Grad-Panoramabildes zugrundeliegende Aufgabe wird gelöst durch die Merkmale des Anspruchs 1; die diesen Erfindungsgedanken weiterbildenden Merkmale sind Gegenstand der Unteransprüche 2 bis 6.

Der Kern der vorliegenden Erfindung ist darin zu sehen, dass das Kamerasystem zur Erzeugung eines 360-Grad-Panoramabildes eine Rückseite, eine Frontseite, eine Oberkante, eine Unterkante und eine erste Seitenkante und eine zweite Seitenkante aufweist, wobei dieses Kamerasystem ein Kommunikationsgerät umfasst, das auf der Frontseite eine Frontseitenkamera umfasst, die Oberkante eine Oberkantenkamera aufweist, die Unterkante eine Unterkantenkamera aufweist, und dass die erste Seitenkante eine erste Seitenkantenkamera und die zweite Seitenkante eine zweite Seitenkantenkamera aufweisen, und dass eine auf der Rückseite angeordnete Rückseitenkamera oder die Frontseitenkamera mit der Oberkantenkamera, mit der Unterkantenkamera und mit der ersten und der zweiten Seitenkamera derart in Wirkverbindung bringbar sind, dass mit dem Kommunikationsgerät eine bildliche rückseitenzugewandte oder eine bildliche frontseitenzugewandte 360-Grad-Panoramabilddarstellung einer räumlichen Umgebung des Kommunikationsgeräts darstellbar sind. Erfindungsgemäss wesentlich ist, dass mittels des Kamerasystems zur Erzeugung eines 360-Grad-Panoramabildes, welches an dem Kommunikationsgerät angeordnet ist, erstmalig eine Möglichkeit besteht, 3D- bzw. 360-Grad-Panoramabilder mit dem Kommunikationsgerät zu erzeugen, welche 3D- bzw. 360-Grad-Panoramabilder frontseitenzugewandt oder rückseitenzugewandt ist. Das bedeutet, dass ein Benutzer dieses Kamerasystems zur Erzeugung eines 360-Grad-Panoramabildes sich selbst mit der 360-Grad räumlichen Umgebung dieses Benutzers mit dem Kommunikationsgerät erfassen kann und/oder in Blickrichtung des Benutzers die 360-Grad räumliche Umgebung dieses Benutzers mit dem Kommunikationsgerät erfassbar ist.

Bei einer Ausführungsform der Erfindung ist vorgesehen, dass das Kamerasystem zur Erzeugung des 360-Grad-Panoramabildes in einem Rahmen für das Kommunikationsmittel angeordnet ist, wobei an diesem Rahmen die Oberkantenkamera, die Unterkantenkamera und die erste und die zweite Seitenkamera angeordnet sind. Diese Ausführungsform ermöglicht es, herkömmliche Kommunikationsgeräte nachträglich mit diesem Kamerasystem auszustatten und somit die Erzeugung von 360-Grad-Panoramabilder auch Kommunikationsgeräten zugänglich zu machen, die noch keine in sich verbauten Oberkantenkameras, Unterkantenkameras, und erste und zweite Seitenkantenkameras aufweisen. Der hier in Rede stehende Rahmen verfügt vorteilhafterweise über eine Steuereinheit, die mit gekannten Mitteln, wie zum Beispiel eine Bluetooth-Kopplung, mit der dem Kommunikationsgerät einen Datenaustausch tätigt. Mit Vorteil ist diese Steuereinheit mit einem eigenen, elektrischen Energiespeicher ausgestattet, der induktiv oder mittels Ladekabel aufladbar ist. Ein besonderes Merkmal dieses Rahmens ist, dass er auf die Grösse des zugehörigen Kommunikationsgeräts angepasst ist und somit formschlüssig dieses Kommunikationsmittel umschliesst.

Bei einer vorteilhaften Ausführungsform der Erfindung ist vorgesehen, dass für die Erzeugung von 360-Grad-Panoramabilder auch die Rückseitenkameras heute gängiger Kommunikationsgeräte genutzt werden.

Bei einer weiteren Ausführungsform der Erfindung ist vorgesehen, dass das Kamerasystem zur Erzeugung des 360-Grad-Panoramabildes in mehreren Rahmenelementen für das Kommunikationsmittel angeordnet ist, wobei an diesen Rahmenelementen die Oberkantenkamera, die Unterkantenkamera und die erste und die zweite Seitenkamera angeordnet sind. Diese Ausführungsform ermöglicht es, herkömmliche Kommunikationsgeräte nachträglich mit diesem Kamerasystem auszustatten und somit die Erzeugung von 360-Grad-Panoramabilder auch Kommunikationsgeräten zugänglich zu machen, die noch keine in sich verbauten Oberkantenkameras, Unterkantenkameras, und erste und zweite Seitenkantenkameras aufweisen. Der hier in Rede stehenden Rahmenelementen verfügen hierfür vorteilhafterweise über eigene Steuereinheiten, die mit gekannten Mitteln, wie zum Beispiel eine Bluetooth-Kopplung, mit der dem Kommunikationsgerät einen Datenaustausch tätigen. Mit Vorteil sind diese Steuereinheiten mit eigenen, elektrischen Energiespeichern ausgestattet, die induktiv oder mittels Ladekabeln aufladbar sind. Ein besonderes Merkmal dieser Rahmenelemente ist darin zu sehen, dass sie eine grosse Flexibilität für ihre Anordnung an herkömmlichen Kommunikationsgeräten bieten, da diese Rahmenelemente entweder lediglich an dem Kommunikationsgerät angesteckt bzw. aufgesteckt werden oder diese Rahmenelemente mittels einer Verbindungsstruktur, wie beispielsweise Gummibänder, miteinander verbunden sind. Somit ist diese Ausführungsform der Erfindung besonders flexibel einsetzbar, beispielsweise an grösseren Geräten, wie Tablets oder Laptops, ohne das eine formschlüssige Anpassung der Rahmenelemente mit dem Kommunikationsgerät von Nöten wäre.

Weitere Ausführungsformen des erfindungsgemässen Kamerasystems zur Erzeugung eines 360-Grad-Panoramabildes und deren zugehörigen Vorteile sind Gegenstand der detaillierten Beschreibung und der Figuren.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen versehen. An dieser Stelle wird darauf hingewiesen, dass die Figuren keine einschränkende Wirkung auf den vorliegenden Erfindungsgegenstand als solches haben, sondern lediglich exemplarische Ausführungsformen des Erfindungsgedankens -wie dieser sich in den Ansprüchen darstelltzeigen.

Es zeigen rein schematisch die
Fig. 1a eine Frontseitenansicht des erfindungsgemässen Kamerasystems zur Erzeugung eines 360-Grad-Panoramabildes;
Fig. 1b eine Rückseitenansicht des erfindungsgemässen Kamerasystems zur Erzeugung eines 360-Grad-Panoramabildes gemäss Fig. 1a;
Fig. 2a eine Frontseitenansicht einer Ausführungsform des Kamerasystems gemäss Fig. 1a mit einem Rahmen für ein Kommunikationsgerät;
Fig. 2b eine Rückseitenansicht der Ausführungsform des Kamerasystems gemäss Fig. 2a mit dem Rahmen für das Kommunikationsgerät;
Fig. 3a eine Frontseitenansicht einer weiteren Ausführungsform des Kamerasystems gemäss Fig. 1a mit einer Anzahl Rahmenelementen für ein Kommunikationsgerät;
Fig. 3b eine Rückseitenansicht der weiteren Ausführungsform des Kamerasystems gemäss Fig. 3a mit der Anzahl Rahmenelementen für das Kommunikationsgerät.

### Wege zur Ausführung der Erfindung

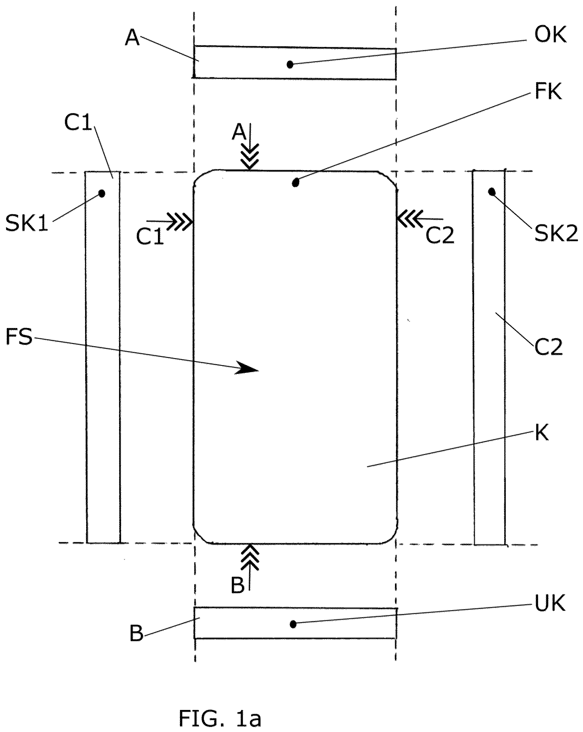

Die Fig. 1a zeigt eine Frontseitenansicht des erfindungsgemässen Kamerasystems zur Erzeugung eines 360-Grad-Panoramabildes mit einer Oberkante A, einer Unterkante B und einer ersten und einer zweiten Seitenkante C1, C2 auf. Diese Oberkante A, die Unterkante B und die erste und zweite Seitenkante C1, C2 sind zum einen mit einem jeweiligen Pfeil angezeigt und zudem nebengeordnet -mittels gestrichelter Linien- in einer jeweiligen Draufsicht dargestellt.

Die Oberkante A des erfindungsgemässen Kamerasystems ist mit einer Oberkantenkamera OK versehen, die Unterkante B mit einer Unterkantenkamera UK und die erste und zweite Seitenkante C1, C2 mit jeweiligen Seitenkantenkameras SK1 bzw. SK2. Das Kamerasystem gemäss der Erfindung ist an einem Kommunikationsgerät K angeordnet, welches an einer Frontseite FS eine Frontseitenkamera FK aufweist.

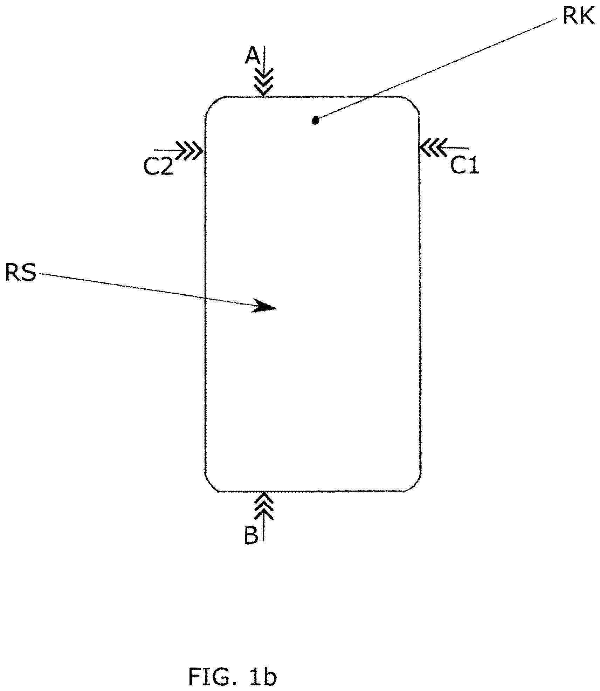

Die Fig. 1b zeigt eine Rückseitenansicht des erfindungsgemässen Kamerasystems zur Erzeugung eines 360-Grad-Panoramabildes gemäss Fig. 1a. Das Kamerasystem weist auf dessen Rückseite RS eine Rückseitenkamera RS auf, wobei diese Rückseitenkamera RS -heutzutage üblicherweise- als Teil des Kommunikationsgeräts K ausgebildet ist.

Die Rückseitenkamera RK oder die Frontseitenkamera FK sind mit der Oberkantenkamera OK, mit der Unterkantenkamera UK und mit der ersten und der zweiten Seitenkamera SK1, SK2 derart in Wirkverbindung bringbar, dass mit dem Kommunikationsgerät K eine bildliche rückseitenzugewandte oder eine bildliche frontseitenzugewandte 360-Grad-Panoramabilddarstellung einer räumlichen Umgebung des Kommunikationsgeräts K darstellbar sind.

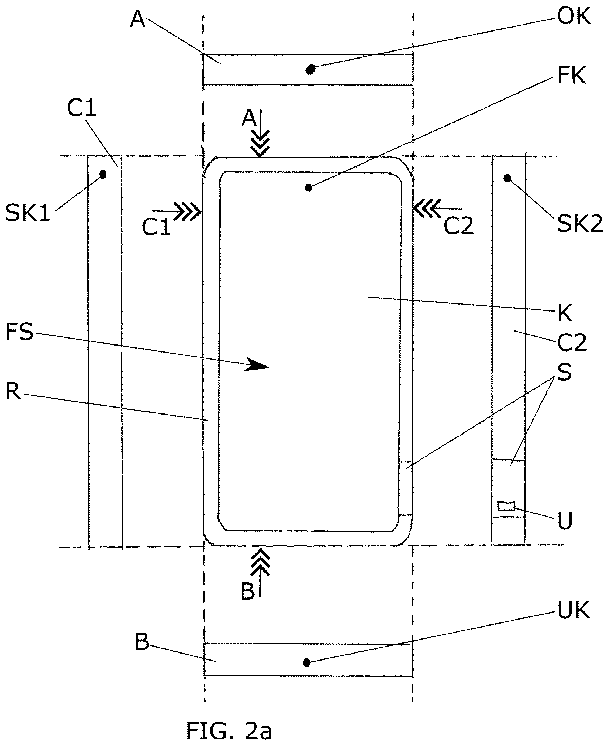

Die Fig. 2a zeigt eine Frontseitenansicht einer Ausführungsform des erfindungsgemässen Kamerasystems zur Erzeugung eines 360-Grad-Panoramabildes gemäss Fig. 1a mit einem Rahmen R mit der Oberkante A, der Unterkante B und der ersten und der zweiten Seitenkante C1, C2. Diese Oberkante A, die Unterkante B und die erste und zweite Seitenkante C1, C2 sind zum einen mit einem jeweiligen Pfeil angezeigt und zudem nebengeordnet -mittels gestrichelter Linien- in einer jeweiligen Draufsicht dargestellt.

Die Oberkante A des Rahmens R ist hier mit einer Oberkantenkamera OK versehen, die Unterkante B mit einer Unterkantenkamera UK und die erste und zweite Seitenkante C1, C2 mit jeweiligen Seitenkantenkameras SK1 bzw. SK2. Der Rahmen R umgibt in dieser Ausführungsform der Erfindung das Kommunikationsgerät K, welches an einer Frontseite FS eine Frontseitenkamera FK aufweist.

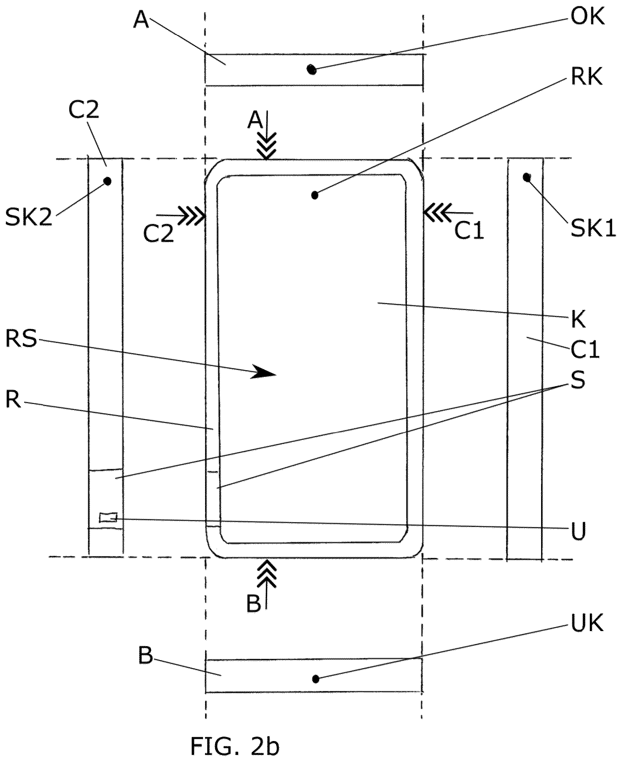

Die Fig. 2b zeigt eine Rückseitenansicht der Ausführungsform des erfindungsgemässen Kamerasystems zur Erzeugung eines 360-Grad-Panoramabildes mit dem Rahmen R gemäss Fig. 2a. Das Kamerasystem weist auf dessen Rückseite RS die Rückseitenkamera RS auf, wobei diese Rückseitenkamera RS -heutzutage üblicherweise- als Teil des Kommunikationsgeräts K ausgebildet ist.

Die Rückseitenkamera RK oder die Frontseitenkamera FK sind mit der Oberkantenkamera OK, mit der Unterkantenkamera UK und mit der ersten und der zweiten Seitenkamera SK1, SK2 derart in Wirkverbindung bringbar, dass mit dem Kommunikationsgerät K eine bildliche rückseitenzugewandte oder eine bildliche frontseitenzugewandte 360-Grad-Panoramabilddarstellung einer räumlichen Umgebung des Kommunikationsgeräts K darstellbar sind.

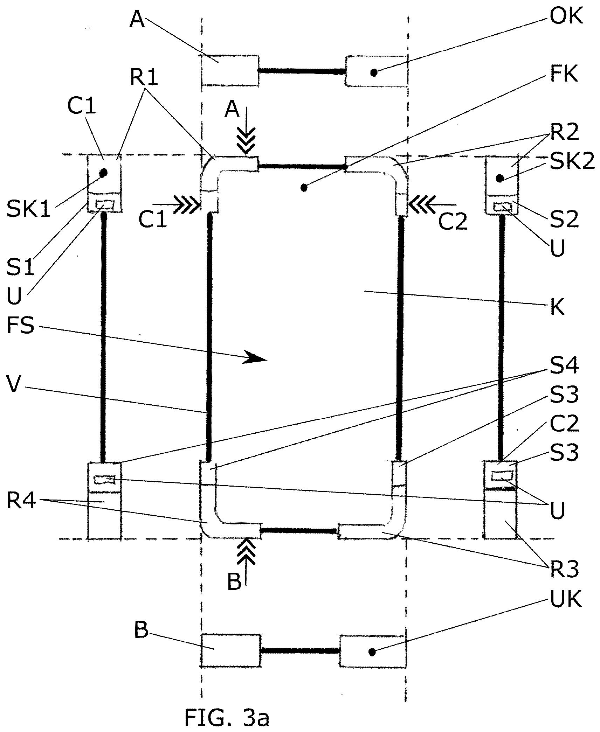

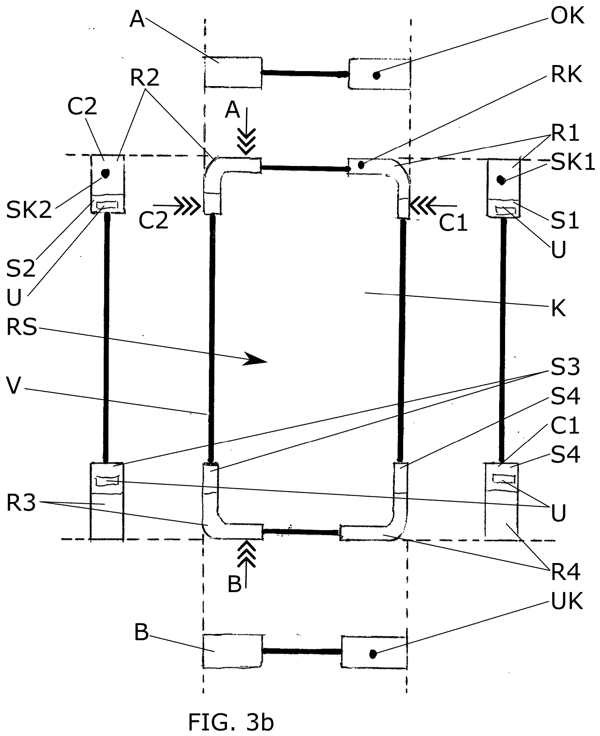

Die Fig. 3a zeigt eine Frontseitenansicht einer weiteren Ausführungsform des erfindungsgemässen Kamerasystems zur Erzeugung eines 360-Grad-Panoramabildes gemäss Fig. 1a mit einer Anzahl Rahmenelementen R1, R2, R3, R4 mit der Oberkante A, der Unterkante B und der ersten und der zweiten Seitenkante C1, C2. Diese Oberkante A, die Unterkante B und die erste und zweite Seitenkante C1, C2 sind zum einen mit einem jeweiligen Pfeil angezeigt und zudem nebengeordnet -mittels gestrichelter Linien- in einer jeweiligen Draufsicht dargestellt.

Die Oberkante A des Rahmenelements R2 ist hier mit einer Oberkantenkamera OK versehen, die Unterkante B des Rahmenelements R3 mit einer Unterkantenkamera UK und die erste und zweite Seitenkante C1, C2 der zugehörigen Rahmenelemente R1 bzw. R2 mit jeweiligen Seitenkantenkameras SK1 bzw. SK2. Die Rahmenelemente R1, R2, R3, R4 umgibt in dieser Ausführungsform der Erfindung das Kommunikationsgerät K, welches an einer Frontseite FS eine Frontseitenkamera FK aufweist, wobei diese Rahmenelement R1, R2, R3, R4 mittels einer Verbindungsstruktur V miteinander verbunden sind. Diese Verbindungsstruktur V kann typischerweise gummiartig, elastisch ausgeführt sein, damit die Grösse des verwendeten Kommunikationselements K nicht einschränkend ist für die Applikation dieses Kamerasystems.

Die Fig. 2b zeigt eine Rückseitenansicht der Ausführungsform des erfindungsgemässen Kamerasystems zur Erzeugung eines 360-Grad-Panoramabildes mit den Rahmenelementen R1, R2, R3, R4 gemäss Fig. 2a. Das Kamerasystem weist auf dessen Rückseite RS die Rückseitenkamera RS auf, wobei diese Rückseitenkamera RS -wenngleich heutzutage üblicherweise als Teil des Kommunikationsgeräts K ausgebildet- vorliegend an einem der Rahmenelemente R1, R2, R3, R4- nämlich dem Rahmenelementen R1, angeordnet ist.

Die Rückseitenkamera RK oder die Frontseitenkamera FK sind mit der Oberkantenkamera OK, mit der Unterkantenkamera UK und mit der ersten und der zweiten Seitenkamera SK1, SK2 derart in Wirkverbindung bringbar, dass mit dem Kommunikationsgerät K eine bildliche rückseitenzugewandte oder eine bildliche frontseitenzugewandte 360-Grad-Panoramabilddarstellung einer räumlichen Umgebung des Kommunikationsgeräts K darstellbar sind.

Der Rahmen in den Fig. 2a, 2b und die Rahmenelementen R1, R2, R3, R4 umfassen Steuereinheiten S, S1, S2, S3, S4, die zum über Kommunikationsmittel -wie beispielsweise Bluetooth-Verbindungen- und zum anderen über elektrische Energiespeicher verfügen, die über geeignete Ladebuchsen U aufgeladen werden können.

Der guten Ordnung halber sei an dieser Stelle angemerkt, dass es -ohne den Erfindungsgedanken zu verlassen- wahlweise möglich ist, alle heute gängigen Kommunikationsgeräte K mit dem erfindungsgemässen Kamerasystem als Erstausstattung oder als Ergänzungsausstattung zu versehen, wobei -nicht abschliessend- zu diesem Kommunikationsgeräten Mobiltelefone, Tablet und Laptops gehören.

### Bezugszeichenliste

- SK1, SK2: Seitenkantenkamera
- UK: Unterkantenkamera
- OK: Oberkantenkamera
- FS: Frontseite
- FK: Frontseitenkamera
- RS: Rückseite
- RK: Rückseitenkamera

- A: Oberkante
- B: Unterkante
- C1: Seitenkante
- C2: Seitenkante

- K: Kommunikationsgerät, mobil
- R: Rahmen für Kommunikationsgerät
- R1, R2, R3, R4: Rahmenelemente für Kommunikationsgerät
- V: Verbindungsstruktur zwischen R1, R2, R3, R4
- S: Steuereinheit
- S1, S2, S3, S4: Steuereinheit
- U: Ladebuchse

## Patentansprüche

1. Kamerasystem zur Erzeugung eines 360-Grad-Panoramabildes mit einer Rückseite (RS) und einer Frontseite (FS), wobei das Kamerasystem eine Oberkante (A), eine Unterkante (B), eine erste Seitenkante (C1) und eine zweite Seitenkante (C2) aufweist, wobei das Kamerasystem ein Kommunikationsgerät (K) umfasst, wobei das Kommunikationsgeräts (K) auf der Frontseite eine Frontseitenkamera (FK) umfasst, wobei die Oberkante (A) eine Oberkantenkamera (OK) aufweist, die Unterkante (B) eine Unterkantenkamera (UK) aufweist, und dass die erste Seitenkante (C1) eine erste Seitenkantenkamera (SK1) und die zweite Seitenkante (C2) eine zweite Seitenkantenkamera (C2) aufweisen, und dass eine auf der Rückseite (RS) angeordnete Rückseitenkamera (RK) oder die Frontseitenkamera (FK) mit der Oberkantenkamera (OK), mit der Unterkantenkamera (UK) und mit der ersten und der zweiten Seitenkamera (SK1, SK2) derart in Wirkverbindung bringbar sind, dass mit dem Kommunikationsgerät (K) eine bildliche rückseitenzugewandte oder eine bildliche frontseitenzugewandte 360-Grad-Panoramabilddarstellung einer räumlichen Umgebung des Kommunikationsgeräts (K) darstellbar sind, **dadurch gekennzeichnet, dass** das Kamerasystem eine Anzahl Rahmenelemente (R1, R2, R3, R4) für das Kommunikationsgerät (K) umfasst, wobei an diesen Rahmenelementen (R1, R2, R3, R4) die Oberkantenkamera (OK), die Unterkantenkamera (UK) und die erste und die zweite Seitenkamera (SK1, SK2) angeordnet sind.

2. Kamerasystem gemäss Anspruch 1, **dadurch gekennzeichnet, dass** das Kamerasystem einen Rahmen (R) für das Kommunikationsgerät (K) umfasst, wobei an diesem Rahmen (R) die Oberkantenkamera (OK), die Unterkantenkamera (UK) und die erste und die zweite Seitenkamera (SK1, SK2) angeordnet sind.

3. Kamerasystem gemäss Anspruch 1 oder 2, **dadurch gekennzeichnet, dass** das Kommunikationsgerät (K) die Rückseitenkamera (RS) umfasst.

4. Kamerasystem gemäss Anspruch 3, **dadurch gekennzeichnet, dass** die Rückseitenkamera (RS) an einem der Rahmenelemente (R1, R2, R3, R4) angeordnet ist.

5. Kamerasystem gemäss einem der Ansprüche 1 bis 5, **dadurch gekennzeichnet, dass** das Kommunikationsgerät (K) ein Kommunikationsgerät aus der folgenden Gruppe ist, umfassend ein Mobiltelefon, ein Tablet, oder ein Laptop.
